# EUROPÄISCHE PATENTANMELDUNG

(11) **EP 0 577 552 A1**
(43) Veröffentlichungstag der Anmeldung: **05.01.1994**
(21) Anmeldenummer: 93810440.3
(22) Anmeldetag: 21.06.1993
(51) Int. Cl.: C02F 3/16

(54) **Verfahren zum Belüften von Flüssigkeit, Oberflächenbelüftungskreisel zur Durchführung des Verfahrens und Verwendung des Oberflächenbelüftungskreisels**

(30) Priorität: 03.07.1992 CH 2113/92
(71) Anmelder: SONDIA HOLDING AG, CH-6300 Zug (CH)
(72) Erfinder: Gödl, Fritz, CH-6373 Ennetbürgen (CH); Gillmann, Willy, CH-6010 Kriens (CH)
(74) Vertreter: Gesthuysen, von Rohr & Weidener

(57) **Zusammenfassung**

Zur Verkürzung der biologischen Abbauzeit in Einbeckenkläranlagen wird die im Becken sich befindende zu belüftende Flüssigkeit zusammen mit den darin sich befindenden Feststoffen unmittelbar vor dem Eintritt in die Förderkanäle eines Oberflächenbelüftungskreisels (1) durch eine Zerkleinerungseinheit (8) geleitet dereneine erste Zerkleinerungselemente (9) fest mit dem Rotorkörper (2) verbunden und deren andere zweite, mit den ersten Zerkleinerungselementen (9) zerkleinernd zusammenwirkende Zerkleinerungselemente (10) gegen eine Drehung um die Kreiselaxe (12) gesichert angeordnet sind.

## Beschreibung

Die Erfindung betrifft ein Verfahren zum Belüften von in einem Becken sich befindender Flüssigkeit, insbesondere von zu klärendem Abwasser, mittels eines von einem Motor angetriebenen vertikalachsigen Oberflächenbelüftungskreisels dessen Rotorkörper mindestens einen Schaufelkranz trägt, der von einer unteren Ansaugseite nach einer oberen Ausstossseite divergiert, wobei die Schaufeln vorzugsweise ein mindestens annähernd L- oder T-förmiges Querschnittsprofil aufweisen, die freien Stege der Schaufeln an der eine Flüssigkeitsleitfläche bildenden Innenseite des Rotorkörpers befestigt sind, jeder Steg an seinem oberen Ende mit einer Radiallinie einen Schaufelaustrittswinkel bildet, und dabei nach innen seitlich offene Förderkanäle gebildet werden, die in vertikalen Ebenen gekrümmt verlaufen, derart, daß von unten in die Förderkanäle eintretende Flüssigkeit in diesen Kanälen bezüglich der Strömungsrichtung um etwa 90° umgelenkt wird und in mindestens angenähert horizontaler Richtung am Umfang des Oberflächenbelüftungskreisels austritt und über die Flüssigkeitsoberfläche geworden wird, wobei die zu belüftende Flüssigkeit keine die Förderkanäle des Oberflächenbelüftungskreisels verstopfende Feststoffe enthält, einen Oberflächenbelüftungskreisel zur Durchführung dieses Verfahrens sowie eine Verwendung dieses Oberflächenbelüftungskreisels.

Die bekannten Verfahren der eingangs genannten Art weisen den Nachteil auf, daß in der zu belüftenden Flüssigkeit sich befindende, im Prinzip biologisch abbaubare Feststoffe wegen ihrer Größe eine unerwünscht lange, und damit äußerst nachteilige Abbauzeit benötigen, was selbst noch im aus einer Kläranlage abgezogenem Belebtschlamm äußerst nachteilig ist.

Aufgabe der vorliegenden Erfindung ist die Schaffung eines Verfahrens, welches diesen Nachteil nicht aufweist, d.h. bei dem in der zu belüftenden Flüssigkeit sich befindende Feststoffe trotz Abmessungen die zu keiner Verstopfung der Förderkanäle des Oberflächenbelüftungskreisels führen würden, bei jeder Rezirkulation durch den Oberflächenbelüftungskreisel hindurch immer wieder erneut weiter zerkleinert werden und somit während der für die Belüftung erforderlichen Verweilzeit im Becken sukzessive auf eine solche Größe verkleinert werden, daß deren biologisch erforderliche Abbau- und damit Behandlungszeit dadurch wesentlich verkürzt wird.

Diese Aufgabe wird bei einem Verfahren der eingangs genannten Art erfindungsgemäss nach dem Kennzeichen des Anspruchs 1 gelöst.

Gegenstand der Erfindung ist ferner ein Oberflächenbelüftungskreisel zur Durchführung dieses Verfahrens nach Anspruch 2.

Zweckmäßige Weiterausgestaltungen des erfindungsgemässen Oberflächenbelüftungskreisels sind Gegenstand der Ansprüche 3 bis 7.

Gegenstand der Erfindung ist außerdem eine Verwendung des erfindungsgemässen Oberflächenbelüftungskreisels nach Anspruch 8.

Nachstehend wird die Erfindung anhand der Zeichnung beispielsweise erläutert. Es zeigt:
Fig.1 schematisch einen Schnitt durch eine beispielsweise Ausführungsform eines für eine Abwasserreinigungsanlage bestimmten erfindungsgemässen Oberflächenbelüftungskreisels;
Fig.2 in vergrößertem Maßstab eine Ansicht in Richtung des Pfeiles A in Figur 1 auf die Zerkleinerungseinheit;
Fig.3 teilweise im Schnitt den in Figur 1 dargestellten Oberflächenbelüftungskreisel, jedoch ohne eingebaute Zerkleinerungseinheit;
Fig.4 einen Schnitt durch die in Figur 3 wegen der Übersichtlichkeit nicht eingezeichnete Zerkleinerungseinheit; und die
Figuren 5 und 6 zwei unterschiedliche Verwendungen des erfindungsgemässen Oberflächenbelüftungskreisels.

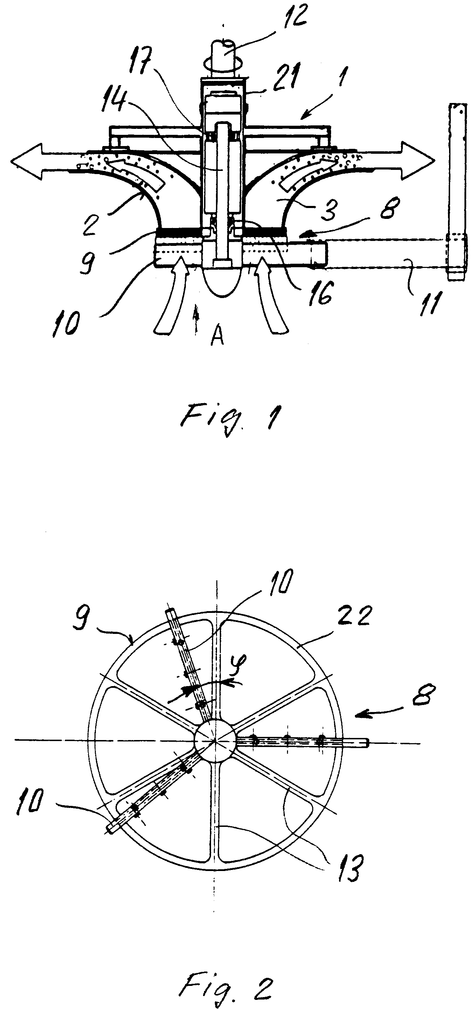

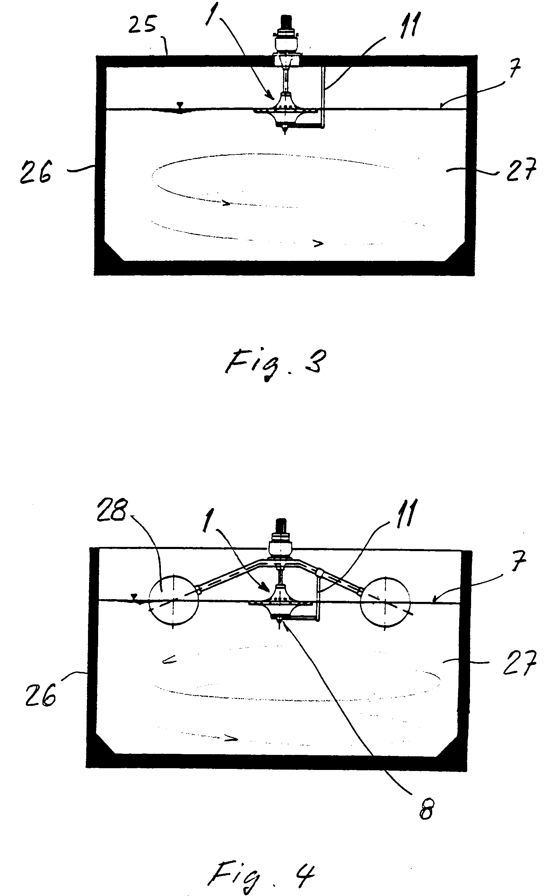

Wie insbesondere aus den Figuren 1 und 3 ersichtlich, weist der dargestellte Oberflächenbelüftungskreisel 1 einen vertikalachsigen Rotorkörper 2 auf, der einen Schaufelkranz 3 trägt und von einer unteren Ansaugseite 4 nach einer oberen Ausstossseite divergiert.

Die Schaufeln 3 weisen ein T-förmiges Querschnittsprofil (siehe Figur 3) auf, wobei die freien Stege 5 der Schaufeln 3 an der eine Flüssigkeitsleitfläche bildenden Innenseite des Rotorkörpers 3 befestigt sind. Jeder dieser Stege 5 bildet im Grundriß gesehen mit einer Radiallinie des Kreisels 1 einen Schaufelaustrittswinkel der vorzugsweise in einem Bereich von 10° bis 35° liegt.

Die dargestellten Schaufeln 3 bilden nach innen seitlich offene Förderkanäle, so daß diese selbst bei stark feststoffhaltigem Abwasser nicht verstopfen können. Die Förderkanäle verlaufen, wie aus den Figuren 1 und 3 ersichtlich, in Vertikalebenen betrachtet derart gekrümmt, daß von unten in diese Förderkanäle eintretende Flüssigkeit in diesen bezüglich der Strömungsrichtung um etwa 90° umgelenkt wird und in mindestens angenähert horizontaler Richtung am Umfang 6 des Oberflächenbelüftungskreisels 1 austritt und über die Wasseroberfläche 7 geworfen wird.

Um nun im zu klärenden Abwasser sich befindende in einem Vorzerkleinerer vor der Einleitung in das Belüftungsbecken 26 auf eine die Förderkanäle des Oberflächenbelüftungskreisels nicht verstopfende Größe zerkleinerte biologisch abbaubare Feststoffe in eine für den biologischen Abbau geeignetere Form zu bringen, ist an der Ansauseite des Oberflächenbelüftungskreisels 1 eine Zerkleinerungseinheit 8 angeordnet, deren eine erste Zerkleinerungselemente 9 fest mit dem Rotorkörper 2 verbunden und deren andere, mit den ersten Zerkleinerungselementen 9 zerkleinert zusammenwirkende zweite Zerkleinerungselemente 10, mittels einem Arretierteil 11 gegen eine Drehung um die Kreiselaxe 12 gesichert angeordnet sind.

Die ersten Zerkleinerungselemente werden durch eine Anzahl von in einem Ring (siehe Figur 2) zusammengefaßte, in der Ansaugöffnung sternförmig angeordnete Scherstege 13 und die zweiten Zerkleinerungselemente durch einen direkt unterhalb der Scherstege 13 angeordneten und diese bei Rotation des Rotorkörpers 2 scherend überstreichenden Messerstern 10 gebildet.

Um eine einwandfreie Zerschneidung von Feststoffen zu erzielen, sind die miteinander zusammenwirkenden Schneidkanten der Scherstege 13 sowie des Messersternes 10 derart geformt, daß der Scherwinkel φ während dem Schervorgang längs der zusammenwirkenden Schneidkanten mehrere Male zu- und abnimmt. Dazu weisen beim dargestellten Ausfünrungsbeispiel die Schneidkanten des Messersternes 10 eine Zick-Zack oder Wellenform auf.

Wie aus den Figuren 1 und 4 ersichtlich, ist der Messerstern 10 über eine Verbindungswelle 14 mit dem Rotorkorper 2 betrieblich fest verbunden und zu letzterem bzw. in letzterem drehbar gelagert.

Die Verbindungswelle 14 ist dabei in einem hülsenartigen Aufnahmeteil 15 des Rotorkörpers 2 drehbar gelagert, wobei die Wellenlager (Kegelrollenlager) 16 und 17 der Verbindungswelle 14 zur Abstützung von Radial- und Axialkräften ausgebildet sind.

Der hülsenförmige Aufnahmeteil 15 ist gleichzeitig als Schmierölreservoir zur Schmierung der Wellenlager 16 und 17 mit Öl 18 ausgebildet, wobei der Ölstand mit Hilfe eines Ölstand-Schauglases 19 von außen kontrolliert werden kann.

Zur stabilen Halterung der Zerkleinerungseinheit 8 im Rotorkörper 2 ist der hülsenförmige Hülsenteil 15 einerseits an seinem oberen Ende über seinen Flanschteil 20 mit dem Trag- und Antriebsteil 21 des Rotorkörpers 2 verschraubt und andrerseits an seinem oberen Ende über die Scherstege 13 sowie den diese miteinander verbindenden Ringteil 22 fest mit dem Rotorkörper 2 verbunden, so daß über die Einstellschrauben 23 eine spielfreie Einstellung der zusammenwirkenden Schneidmesser 10,13 erreicht werden kann.

Bei der in Figur 5 dargestellten Abwasserreinigungsanlage ist der Oberflächenbelüftungskreisel 1 in axialer Richtung fixiert mit einer festen Brücke oder Plattform 25 verbunden, da bei dieser Ausführungsform der Wasserspiegel 7 des im Belüftungsbecken 26 sich befindenden, zu belüftenden Abwassers 27 sich auf einem konstanten Niveau befindet.

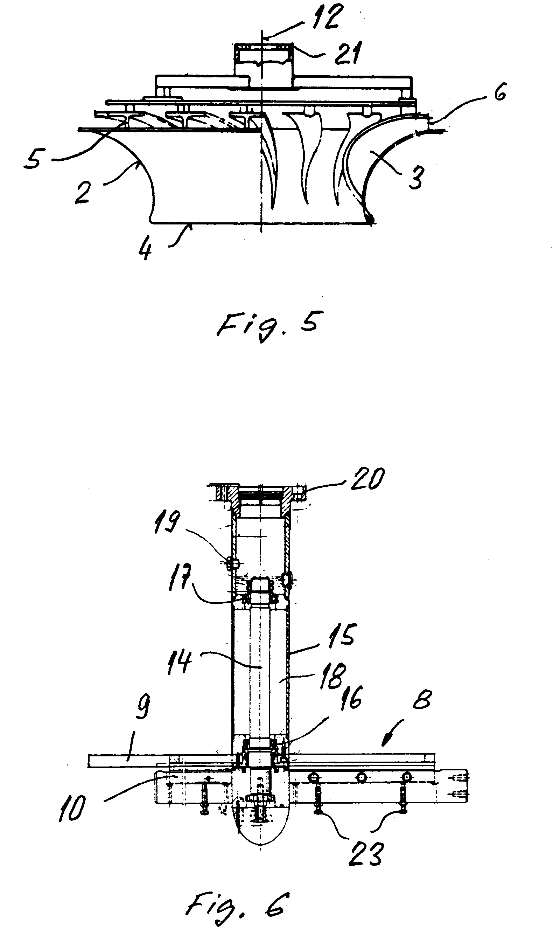

Bei der in Figur 6 dargestellten Einbeckenkläranlage mit veränderlichem Wasserspiegelniveau 7 ist die Oberflächenbelüftungseinheit fest mit einer im Becken 26' angeordneten Schwimmkonstruktion 28 verbunden, so daß die Eintauchtiefe des Oberflächenbelüftungskreisels 1 auch bei unterschiedlichem Wasserspiegelniveau 7 immer gleich groß ist.

## Patentansprüche

1. Verfahren zum Belüften von in einem Becken sich befindender Flüssigkeit, insbesondere von zu klärendem Abwasser, mittels eines von einem Motor angetriebenen vertikalachsigen Oberflächenbelüftungskreisels dessen Rotorkörper mindestens einen Schaufelkranz trägt, der von einer unteren Ansaugseite nach einer oberen Ausstoßseite divergiert, wobei die Schaufeln vorzugsweise ein mindestens annähernd L- oder T-förmiges Querschnittsprofil aufweisen, die freien Stege der Schaufeln an der eine Flüssigkeitsleitfläche bildenden Innenseite des Rotorkörpers befestigt sind, jeder Steg an seinem oberen Ende mit einer Radiallinie einen Schaufelaustrittswinkel bildet, und dabei nach innen seitlich offene Förderkanäle gebildet werden, die in vertikalen Ebenen gekrümmt verlaufen, derart, daß von unten in die Förderkanäle eintretende Flüssigkeit in diesen Kanälen bezüglich der Strömungsrichtung um etwa 90° umgelenkt wird und in mindestens angenähert horizontaler Richtung am Umfang des Oberflächenbelüftungskreisels austritt und über die Flüssigkeitsoberfläche geworfen wird, wobei die zu belüftende Flüssigkeit keine die Förderkanäle des Oberflächenbelüftungskreisels verstopfende Feststoffe enthält, dadurch gekennzeichnet, daß man zur Verkürzung der biologisch erforderlichen Abbauzeit von in der Flüssigkeit sich befindenden Feststoffen die im Becken sich befindende zu belüftende Flüssigkeit unmittelbar vor dem Eintritt in die Förderkanäle des Oberflächenbelüftungskreisels durch eine Zerkleinerungseinheit leitet und nach deren Umwälzung im Becken diesen Zerkleinerungsvorgang mindestens so lange kontinuierlich wiederholt, bis die Feststoffe auf eine für den biologischen Abbauprozess optimale Größe zerkleinert sind.

2. Oberflächenbelüftungskreisel zur Durchführung des Verfahrens nach Anspruch 1, mit einem vertikalachsigen Rotorkörper (2), der mindestens einen Schaufelkranz (3) trägt und der von einer unteren Ansaugseite (4) nach einer oberen Ausstoßseite divergiert, wobei die Schaufeln (3) vorzugsweise ein mindestens annähernd L- oder T-förmiges Querschnittsprofil aufweisen, die freien Stege (5) der Schaufeln (3) an der eine Flüssigkeitsleitfläche bildenden Innenseite des Rotorkörpers (2) befestigt sind, jeder Steg (5) an seinem oberen Ende mit einer Radiallinie einen schaufelaustrittswinkel bildet, und dabei nach innen seitlich offene Förderkanäle gebildet werden, die in vertikalen Ebenen gekrümmt verlaufen, derart, daß von unten in die Förderkanäle eintretende Flüssigkeit in diesen Kanälen bezüglich der Strömungsrichtung um etwa 90° umgelenkt wird und in mindestens angenähert horizontaler Richtung am Umfang des Oberflächenbelüftungskreisels austritt und über die Flüssigkeitsoberfläche (7) geworfen wird, dadurch gekennzeichnet, daß an der Ansaugseite (4) eine Zerkleinerungseinheit (8) angeordnet ist, deren eine erste Zerkleinerungselemente (9) fest mit dem Rotorkörper (2) verbunden und deren andere zweite, mit den ersten Zerkleinerungselementen (9) zerkleinernd zusammenwirkende Zerkleinerungselemente (10) gegen eine Drehung um die Kreiselaxe (12) gesichert angeordnet sind, daß die zweiten Zerkleinerungselemente (10) gemeinsam über eine Verbindungswelle (14) mit dem Rotorkörper (2) verbunden und relativ zu letzterem drehbar gelagert sind, und daß die Verbindungswelle (14) in einem hülsenförmigen Aufnahmeteil (15) des Rotorkörpers (2) drehbar gelagert und dieser Aufnahmeteil (15) gleichzeitig als Schmierölreservoir zur Schmierung der Wellenlager mit Öl (8) ausgebildet ist.

3. Oberflächenbelüftungskreisel nach Anspruch 2, dadurch gekennzeichnet, daß die ersten Zerkleinerungselemente durch eine Anzahl von in der Ansaugöffnung (4) sternförmig angeordneten Scherstegen (13) und die zweiten Zerkleinerungselemente durch einen direkt unterhalb der letzteren angeordneten und diese bei Rotation des Rotorkörpers (2) scherend überstreichenden Messerstern (10) gebildet werden.

4. Oberflächenbelüftungskreisel nach Anspruch 3, dadurch gekennzeichnet, daß die miteinander zusammenwirkenden Schneidkanten der Scherstege (13) sowie des Messersternes (10) derart geformt sind, daß der Scherwinkel (φ) während dem Schervorgang längs der Schneidkanten mehrere Male zu- und abnimmt.

5. Oberflächenbelüftungskreisel nach Anspruch 4, dadurch gekennzeichnet, daß die Schneidkanten der Scherstege (13) und/oder des Messersternes (10) eine Zick-Zack- oder Wellenform aufweisen.

6. Oberflächenbelüftungskreisel nach Anspruch 1, dadurch gekennzeichnet, daß die Wellenlager (16,17) der Verbindungswelle (14) zur Abstützung von Radial- und Axialkräften ausgebildet sind.

7. Oberflächenbelüftungskreisel nach Anspruch 3, dadurch gekennzeichnet, daß der hülsenförmige Aufnahmeteil (15) zu seiner Halterung einerseits mit einem Trag- und Antriebsteil (21) des Rotorkörpers (2) und andrerseits in seinem gegenüberliegenden Endbereich über die Scherstege (13) mit dem letzteren (2) verbunden ist.

8. Verwendung des Oberflächenbelüftungskreisels nach einem der Ansprüche 2 bis 7 in schwimmender Anordnung in einer Einbeckenkläranlage (Fig. 6).
